# EUROPÄISCHE PATENTANMELDUNG

(11) **EP 2 887 023 A2**
(43) Veröffentlichungstag der Anmeldung: **24.06.2015**
(21) Anmeldenummer: 14196860.2
(22) Anmeldetag: 09.12.2014
(51) Int. Cl.: G01D 5/244

(54) **Verfahren zum Bestimmen einer Drehwinkelstellung und/oder einer Drehzahl**

(30) Priorität: 23.12.2013 DE 102013227055
(71) Anmelder: ROBERT BOSCH GMBH, 70442 Stuttgart (DE)
(72) Erfinder: Grimm, Sebastian, 97070 Wuerzburg (DE); Vath, Andreas, 63849 Leidersbach (DE)
(74) Vertreter: Thürer, Andreas

(57) **Zusammenfassung**

Die Erfindung betrifft ein Verfahren zum Bestimmen einer Drehwinkelstellung und/oder einer Drehzahl eines rotierenden Elements (2) eines Antriebsstrangs (10), wobei wenigstens zwei Sensoren (20, 21, 22, 23), die in umfänglicher Richtung des rotierenden Elements (2) des Antriebsstrangs (10) versetzt angeordnet sind, je einen die Rotation charakterisierenden Messwert erfassen, wobei aus den Messwerten die Drehwinkelstellung und/oder die Drehzahl bestimmt werden, wobei bei der Bestimmung ein Abstand der wenigstens zwei Sensoren (20, 21, 22, 23) in umfänglicher Richtung berücksichtigt wird.

## Beschreibung

Die vorliegende Erfindung betrifft ein Verfahren zum Bestimmen einer Drehwinkelstellung und/oder einer Drehzahl, insbesondere zur weiteren Bestimmung eines Verdrehwinkels und/oder eines Drehmoments, in einem Antriebsstrang, insbesondere in einer Energieerzeugungsanlage, und einen solchen Antriebsstrang.

### Stand der Technik

Antriebsstränge, bestehend aus Komponenten, wie beispielsweise Getrieben, Kupplungen und Verbindungselementen (Wellen), sind wichtige Bestandteile u.a. verschiedener elektrischer Energieerzeugungsanlagen, wie z.B. von Windenergieanlagen, Wasserkraftanlagen etc.

Der Antriebsstrang erfüllt die Aufgabe, eine mechanische Verbindung zwischen einem Antrieb (beispielsweise einem Rotor einer Windenergieanlage) und einem Abtrieb (beispielsweise einem entsprechenden Generator) herzustellen, über welche durch eine Drehbewegung Energie übertragen wird. Antriebsstrangkomponenten, wie Getriebe, dienen dazu, die Drehzahl und das Drehmoment, die am Antrieb anliegen, auf Werte zu übersetzen, die dem Arbeitsbereich des Abriebs entsprechen. Kupplungen werden bei Bedarf für eine Trennung zwischen An- und Abtrieb genutzt und Wellen stellen die mechanische Verbindung zwischen den beteiligten Komponenten her. Auch weitere Komponenten, wie mechanische Bremsen oder dergleichen, können im Antriebsstrang integriert sein.

Da die beteiligten Komponenten und auch die Anbindung der Komponenten nicht beliebig starr sind, sondern eine endliche Steifigkeit besitzen, kommt es zu einer Verlagerung der Wellen. Die Verlagerung der Wellen wirkt sich nachteilig auf die Messgenauigkeit aus.

Wenngleich die vorliegende Erfindung im Rahmen dieser Anmeldung vornehmlich in Bezug auf Windenergieanlagen beschrieben wird, ist sie keinesfalls auf Windenergieanlagen oder Einrichtungen zur Energieerzeugung beschränkt, sondern prinzipiell bei allen Vorrichtungen einsetzbar, bei denen Torsionsschwingungen von Wellen, Achsen und dergleichen, insbesondere auch von Wellen und Achsen mit zwischengeschalteten Getrieben, auftreten können.

So sind in der DE 10 2011 118 831 A1 ein Verfahren und ein Messsystem beschrieben, die anhand von Winkeldifferenzen von Wellen ein Drehmoment berechnen, das als Eingangsgröße für einen Regler dienen kann, mit dem Schwingungen im Antriebsstrang gedämpft werden können.

Ein ähnlicher Ansatz wird in der US 2008/0067815 verfolgt, wonach aus Änderungen in der Generatordrehzahl ein Signal erzeugt wird, durch das eine Dämpfung über das Generatorstellmoment realisiert wird.

Als nachteilig an all diesen Lösungen ist anzusehen, dass die Signalqualität für Drehzahl, Drehmoment und Verdrehwinkel aufgrund der Verlagerung der Wellen gegenüber der Halterung nur mit einer eingeschränkten Genauigkeit ermittelt werden kann.

Es ist daher wünschenswert, eine Möglichkeit anzugeben, eine Drehzahl, ein Drehmoment und/oder einen Verdrehwinkel bei Antriebssträngen mit hoher Genauigkeit zu erfassen.

### Offenbarung der Erfindung

Erfindungsgemäß werden ein Verfahren und ein Antriebsstrang mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

Bei einem erfindungsgemäßen Verfahren zum Bestimmen einer Drehwinkelstellung und/oder einer Drehzahl in einem Antriebsstrang, insbesondere in einer Energieerzeugungsanlage, insbesondere einer Windenergieanlage, wobei wenigstens zwei Sensoren, die in umfänglicher Richtung eines rotierenden Elements versetzt angeordnet sind, wird je ein die Rotation charakterisierender Messwert von einem Sensor erfasst. Aus den Messwerten werden die Drehwinkelstellung und/oder die Drehzahl bestimmt, wobei bei der Bestimmung ein Abstand der wenigstens zwei Sensoren in umfänglicher Richtung berücksichtigt wird. Dadurch wird eine Verlagerung, insbesondere eine tangentiale und/oder radiale Verlagerung, des rotierenden Elements im Antriebsstrang, insbesondere unter Last, kompensiert. Ebenso ist die Bestimmung eines Verdrehwinkels und/oder Drehmoments möglich. Durch die in Umfangsrichtung versetzte Anordnung kann eine Messwertabweichung, die durch die Verlagerung zustande kommt, ausgeglichen werden, da bei den beiden versetzten Sensoren die Verlagerung unterschiedlich wirkt, d.h. die von den beiden Sensoren erfassten Messwerte weichen voneinander ab. Unter Berücksichtigung des genauen Versatzes kann somit die Abweichung herausgerechnet werden. Eine tangentiale und oder radiale Verlagerung des sich drehenden Elements wirkt sich somit nicht mehr negativ auf die Messgenauigkeit aus. Es kann daher ein sehr genauer Wert erhalten werden.

Mit einer exakten Drehzahl- und/oder Drehmomentmessung kann die Regelung bzw. Steuerung einer Windenergieanlage derart verbessert werden, dass der Energieertrag gesteigert werden kann und gleichzeitig durch das Erkennen und Erfassen von dynamischen Lasten und Schwingungen diese aktiv gedämpft werden. Bei der Drehmoment- und Pitchregelung, die bei Windenergieanlagen meist ein Drehzahlsignal eines Generators als Eingangsgröße verwenden, kann auf Filter verzichtet werden und so kann der Regelalgorithmus deutlich schneller die richtigen Sollwerte für das einzustellende Drehmoment bzw. den einzustellenden Pichwinkel geben. Damit kann dann auf unvorhergesehene Ereignisse schneller reagiert werden und negative Folgen können dadurch deutlich reduziert werden.

Vorzugsweise sind zwei der Sensoren zwischen 150° und 210°, insbesondere um ca. 180°, zueinander in umfänglicher Richtung des sich drehenden Elements versetzt und/oder in axialer Richtung auf (etwa) gleicher Höhe angeordnet. Dadurch ist die Abweichung durch die Verlagerung auf die von den beiden Sensoren erfassten Messwerte entgegengesetzt gerichtet und kann auf einfache Weise herausgerechnet werden, da die Abweichungen insbesondere auch betragsmäßig gleich sind.

Vorteilhafterweise wird wenigstens ein weiterer Sensor zur Erfassung eines Messwerts des Antriebsstrangs verwendet, wobei der Messwert bei der Bestimmung der Drehwinkelstellung und/oder der Drehzahl und/oder des Verdrehwinkels und/oder des Drehmoments berücksichtigt wird. Insbesondere ist dieser wenigstens eine weitere Sensor dabei in axialer Richtung zu den wenigstens zwei Sensoren versetzt angeordnet. Der wenigstens eine weitere Sensor kann ebenfalls zwei in Umfangsrichtung versetzt angeordnete Sensoren umfassen. Durch einen solchen weiteren Sensor kann ein zusätzlicher Referenz-Messwert erhalten werden, der für eine bessere Ermittlung der Drehwinkelstellung und/oder der Drehzahl oder eine allgemeine Steigerung der Messgenauigkeit verwendet werden kann. Durch einen solchen weiteren Sensor kann alternativ auch ein zusätzlicher Messwert erhalten werden, der für eine Berechnung des Verdrehwinkels und/oder des Drehmoments verwendet werden kann.

Es ist zudem von Vorteil, wenn der wenigstens eine weitere Sensor einen Messwert an einem anderen, sich schneller drehenden Element des Antriebsstrangs erfasst als die wenigstens zwei Sensoren. Dazu ist der weitere Sensor insbesondere nach einem Getriebe angeordnet, während die wenigstens zwei Sensoren vor dem Getriebe angeordnet sind. Die Kompensation der Messwerte der wenigstens zwei Sensoren kann so von einem sich stärker verlagerten Element, wie dies bspw. rotorseitig bei einer Windenergieanlage der Fall ist, berechnet werden und der Referenz-Messwert von einem nicht oder nur wenig verlagerten Element, wie dies generatorseitig meist der Fall ist.

Vorzugsweise werden vier Sensoren verwendet, die je einen Messwert des rotierenden Elements des Antriebsstrangs erfassen, wobei je zwei der vier Sensoren in umfänglicher Richtung zueinander versetzt angeordnet sind. Durch die Verwendung von zwei Sensor-Paaren zur Kompensation der Messwerte kann die Messgenauigkeit weiter erhöht werden. Insbesondere können die zwei Sensor-Paare jedoch auch Messwerte in unterschiedlichen radialen Richtungen erfassen, wodurch eine Kompensation mehrerer, bspw. zueinander senkrechten, Verlagerungsrichtungen berücksichtigt werden kann.

Vorteilhafterweise werden die Messwerte von den Sensoren mittels eines Signalbandes, insbesondere mit Markierungen, oder an einem Zahnrad, insbesondere eines Getriebes, erfasst. Ein Signalband mit Markierungen, bspw. ein Metallband mit Löcher oder ferromagnetischen Elementen oder farblichen Markierungen, kann in sehr einfacher Weise an einem rotierenden Element, insbesondere einer Welle in einer Energieerzeugungsanlage, angebracht werden. Besonders einfach ist somit auch eine Nachrüstung möglich. Die entsprechenden Sensoren können dann so angebracht werden, dass die Markierungen auf dem Signalband erfasst werden können. Die Sensoren weisen dazu eine entsprechende Erfassungseinheit, bspw. eine induktive oder optische, auf. Das gemessene Signal ist in diesem Fall eine Pulsfolge, z.B. Rechteckpulsfolge, aus der auf bekannte Weise eine Drehzahl und/oder eine Drehwinkelstellung bestimmt werden können.

Eine erfindungsgemäße Recheneinheit, z.B. ein Steuergerät einer Windenergieanlage, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, FlashSpeicher, EEPROMs, CD-ROMs, DVDs u.a.m. Auch ein Download eines Programms über Computernetze (Internet, Intranet usw.) ist möglich.

Ein erfindungsgemäßer Antriebsstrang mit einem rotierenden Element, insbesondere mit einem Signalband und/oder einem Zahnrad, weist wenigstens zwei Sensoren auf, die in umfänglicher Richtung versetzt an dem rotierenden Element angeordnet sind und dazu eingerichtet sind je einen Messwert des rotierenden Elements zur Bestimmung eines Drehwinkels und/oder einer Drehzahl zu erfassen. Ein solcher Antriebsstrang, insbesondere in einer Energieerzeugungsanlage, insbesondere einer Windenergieanlage, kann zur Durchführung eines erfindungsgemäßen Verfahrens benutzt werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt schematisch eine Windenergieanlage zur Durchführung eines erfindungsgemäßen Verfahrens in einer bevorzugten Ausgestaltung.
Figur 2 zeigt schematisch einen Antriebsstrang einer Windenergieanlage zur Durchführung eines erfindungsgemäßen Verfahrens in einer bevorzugten Ausgestaltung.
Figur 3 zeigt schematisch ein Getriebe zur Durchführung eines erfindungsgemäßen Verfahrens in einer bevorzugten Ausgestaltung.

### Detaillierte Beschreibung der Zeichnung

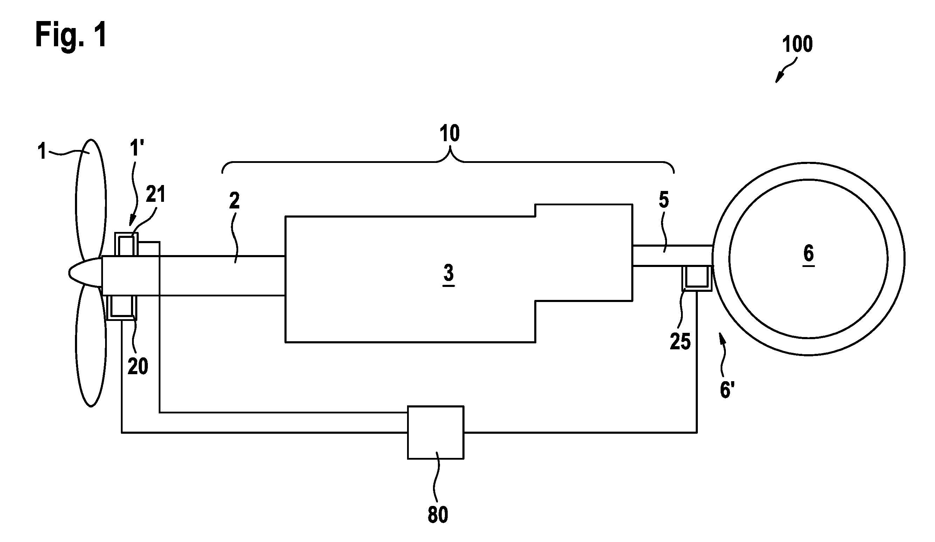

In Figur 1 ist schematisch eine Windenergieanlage 100 dargestellt. Mittig weist die Windenergieanlage 100 einen Antriebsstrang 10 auf, welcher wiederum ein Getriebe 3 mit einem als rotorseitige Welle 2 ausgebildeten rotierenden Element und einem als generatorseitige Welle 5 ausgebildeten rotierenden Element aufweist. Das Getriebe 3 bedingt, dass die Rotationsgeschwindigkeiten der Wellen 2 und 5 unterschiedlich sind, insbesondere dreht sich die Welle 5 bei Betrieb der Windenergieanlage 100 schneller als die Welle 2.

Weiter umfasst die Windenergieanlage 100 am rotorseitigen Ende 1' des Antriebsstrangs 10 einen Rotor 1 und am generatorseitigen Ende 6' des Antriebsstrangs 10 einen Generator 6. Durch den Antriebsstrang 10 wird somit eine Drehbewegung des Rotors 1 auf den Generator 6 übertragen.

Am rotorseitigen Ende 1' sind an der Welle 2 zwei Sensoren 20, 21 angeordnet, die in umfänglicher Richtung zueinander um 180° versetzt sind. Am generatorseitigen Ende 6' ist an der Welle 5 ein weiterer Sensor 25 angeordnet. Die Sensoren 20, 21, 25 sind an eine Recheneinheit 80 angebunden, mittels welcher die von den Sensoren 20, 21, 25 erfassten Messwerte, bspw. eine Drehzahl, verarbeitet werden. Insbesondere findet in der Recheneinheit 80 eine Kompensation einer Verlagerung der Welle 2 in radialer Richtung statt. Dabei wird ein Mittelwert der von den beiden Sensoren 20, 21 erfassten Messwerte gebildet.

Mit dem Messwert des weiteren Sensors 25 kann insbesondere ein Drehmoment bestimmt werden, indem eine Torsion bzw. ein Verdrehwinkel entlang einer axialen Richtung des Antriebsstrangs 10, d.h. zwischen dem rotorseitigen Ende 1' und dem generatorseitigen Ende 6', ermittelt wird. Mittels des Verdrehwinkels und eines bekannten oder bestimmbaren Torsionsmoduls kann somit auf ein Drehmoment geschlossen werden. Hierbei ist eine Übersetzung des Getriebes 3 bei der Drehzahl bzw. der Drehung zu berücksichtigen.

In Figur 1 ist ebenfalls eine Windenergieanlage 100 dargestellt. Diese weist wiederum ein Getriebe 3 mit einem als rotorseitige Welle 2 ausgebildeten rotierenden Element und einem als generatorseitige Welle 5 ausgebildeten rotierenden Element auf. Das Getriebe 3 bedingt, dass die Rotationsgeschwindigkeiten der Wellen 2 und 5 unterschiedlich sind, insbesondere dreht sich die Welle 5 bei Betrieb der Windenergieanlage 100 schneller als die Welle 2. Die Wellen 2, 5 und das Getriebe bilden zusammen den Antriebsstrang.

Weiter umfasst die Windenergieanlage 100 am rotorseitigen Ende des Antriebsstrangs einen Rotor 1 und am generatorseitigen Ende des Antriebsstrangs einen Generator, der hier jedoch nicht dargestellt ist. Durch den Antriebsstrang wird somit eine Drehbewegung des Rotors 1 auf den Generator übertragen.

Am rotorseitigen Ende sind an der Welle 2 vier Sensoren 20, 21, 22, 23 angeordnet, wobei die Sensoren 20, 21 und die Sensoren 22, 23 jeweils in umfänglicher Richtung zueinander um 180° versetzt sind. In axialer Richtung sind die Sensor-Paare 20, 21 und 22, 23 ebenfalls versetzt. Am generatorseitigen Ende ist an der Welle 5 ein weiterer Sensor 25 angeordnet.

Die Sensoren 20, 21, 22, 23, 25 sind an eine Recheneinheit 80 angebunden, mittels welcher die von den Sensoren 20, 21, 22, 23, 25 erfassten Messwerte, bspw. eine Drehzahl, verarbeitet werden. Insbesondere findet in der Recheneinheit 80 eine Kompensation einer Verlagerung der Welle 2 in radialer Richtung statt. Dabei wird ein Mittelwert der von den beiden Sensoren 20, 21 erfassten Messwerte gebildet. Gleiches gilt für die Sensoren 22, 23, wobei durch die zusätzlichen Messwerte die Genauigkeit der ermittelten Drehzahl erhöht wird. Hierzu kann bspw. jeweils über die Sensoren 20, 21 und 22, 23 gemittelt werden und anschließend über diese beiden Mittelungen. Dabei können mehrere, insbesondere zueinander senkrechte, radiale Verlagerungen berücksichtigt werden.

Weiter sind an den Wellen 2, 5 Signalbänder angebracht, von denen eines an der Welle 2 beispielhaft mit 30 bezeichnet ist. Ein solches Signalband mit Markierungen, bspw. ein Metallband mit Löchern, Erhebungen oder magnetischen Elementen, ermöglicht eine Erfassung der Drehzahl der Welle 2 mittels der Sensoren 20, 21. Besonders einfach ist auch eine Nachrüstung eines solchen Signalbandes bei bestehenden Antriebssträngen von Windenergieanlagen möglich, da dieses nur um die Welle gelegt und befestigt werden muss. Die entsprechenden Sensoren, bspw. die Sensoren 20, 21 können entsprechend angebracht werden, damit mit ihnen eine Drehung des Signalbandes erfasst werden kann.

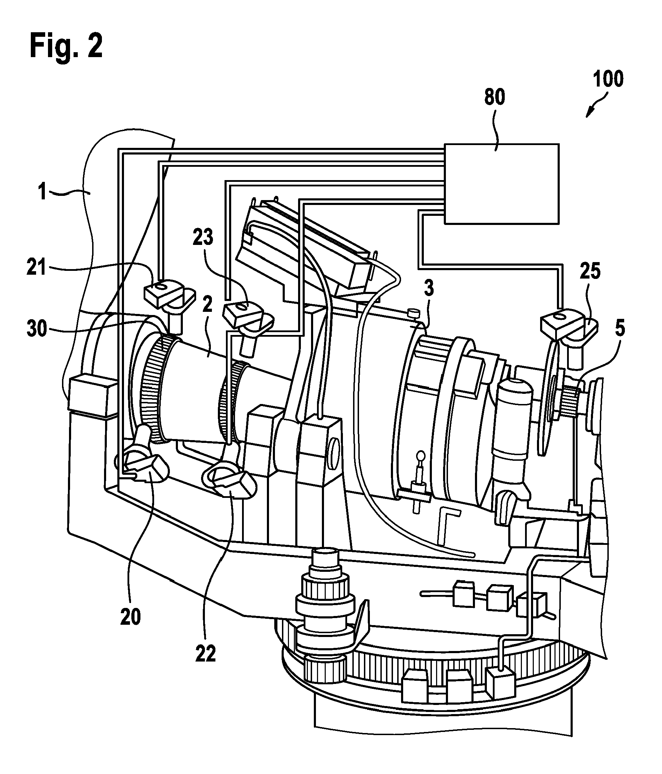

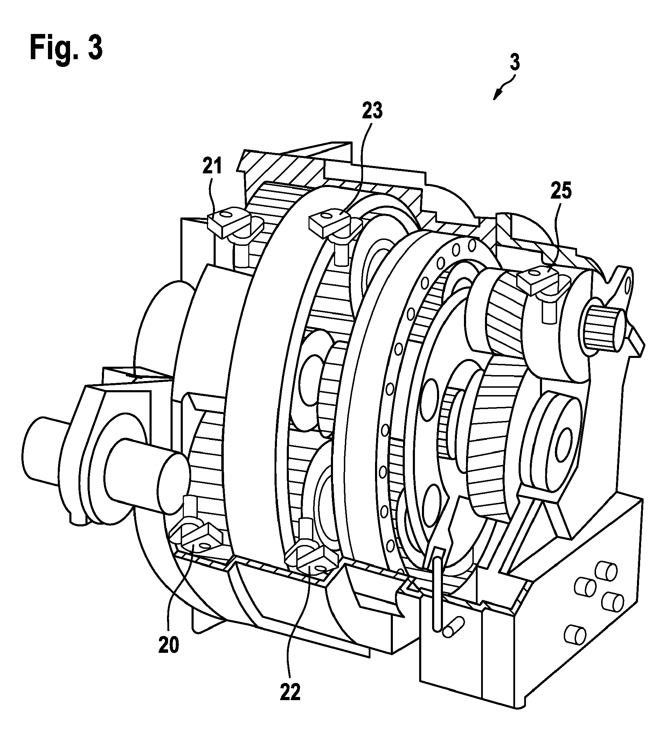

In Figur 3 ist ein Getriebe 3 eines Antriebsstrangs dargestellt. An dem Getriebe 3 sind schematisch Sensoren 20, 21, 22, 23, 25 dargestellt, die so verwendet werden, wie in den Figuren 1 und 2 beschrieben. Der Unterschied ist hier jedoch, dass die Sensoren nicht an Wellen angeordnet sind, sondern am bzw. im Getriebe.

Eine Erfassung der Messwerte kann hier bspw. durch Erfassung der Zähne der sich drehenden Zahnräder erfolgen. Wiederum erfassen die Sensoren unterschiedliche Drehzahlen, da sie an sich unterschiedlich schnell drehenden Elementen angeordnet sind.

## Patentansprüche

1. Verfahren zum Bestimmen einer Drehwinkelstellung und/oder einer Drehzahl eines rotierenden Elements (2) eines Antriebsstrangs (10),
wobei wenigstens zwei Sensoren (20, 21, 22, 23), die in umfänglicher Richtung des rotierenden Elements (2) des Antriebsstrangs (10) versetzt angeordnet sind, je einen die Rotation charakterisierenden Messwert erfassen,
wobei aus den Messwerten die Drehwinkelstellung und/oder die Drehzahl bestimmt werden,
wobei bei der Bestimmung ein Abstand der wenigstens zwei Sensoren (20, 21, 22, 23) in umfänglicher Richtung berücksichtigt wird.

2. Verfahren nach Anspruch 1, wobei aus wenigstens zwei Drehwinkelstellungswerten und/oder Drehzahlwerten ein Verdrehwinkel und/oder ein Drehmoment bestimmt werden.

3. Verfahren nach Anspruch 1 oder 2, wobei zwei der Sensoren (20, 21, 22, 23) in umfänglicher Richtung um 150° bis 210° versetzt und/oder in axialer Richtung auf etwa gleicher Höhe angeordnet sind.

4. Verfahren nach Anspruch 3, wobei aus den Messwerten die Drehwinkelstellung und/oder die Drehzahl gemäß einer Berechnungsvorschrift und/oder einer Mittelwertbildung ermittelt werden.

5. Verfahren nach einem der vorstehenden Ansprüche, wobei wenigstens ein weiterer Sensor (25) einen weiteren die Rotation charakterisierenden Messwert erfasst, wobei der weitere die Rotation charakterisierende Messwert bei der Bestimmung der Drehwinkelstellung und/oder der Drehzahl berücksichtigt wird.

6. Verfahren nach Anspruch 5, wobei der wenigstens eine weitere Sensor (25) gegenüber den wenigstens zwei Sensoren (20, 21, 22, 23) in axialer Richtung versetzt angeordnet ist.

7. Verfahren nach Anspruch 6 in Rückbezug zumindest auf Anspruch 2, wobei der weitere die Rotation charakterisierende Messwert bei der Bestimmung des Verdrehwinkels und/oder des Drehmoments verwendet wird.

8. Verfahren nach Anspruch 6 oder 7, wobei der Antriebsstrang (10) ein Getriebe (3) aufweist und wobei der wenigstens eine weitere Sensor (25) an einem sich schneller drehenden Element (5) des Antriebsstrangs angeordnet ist als die wenigstens zwei Sensoren (20, 21, 22, 23).

9. Verfahren nach einem der vorstehenden Ansprüche, wobei vier Sensoren (20, 21, 22, 23) je einen die Rotation charakterisierenden Messwert erfassen, wobei je zwei der vier Sensoren (20, 21, 22, 23) in umfänglicher Richtung zueinander versetzt angeordnet sind.

10. Verfahren nach einem der vorstehenden Ansprüche, wobei die zwei in umfänglicher Richtung versetzten Sensoren (20, 21) den Messwert mittels eines Signalbandes (30) oder eines Zahnrades erfassen.

11. Verfahren nach Anspruch 10, wobei das Signalband (30) Markierungen aufweist.

12. Verfahren nach einem der vorstehenden Ansprüche, wobei der Antriebsstrang (10) ein Antriebsstrang einer Energieerzeugungsanlage (100), insbesondere einer Windenenergieanlage, ist.

13. Recheneinheit, die dazu eingerichtet ist, ein Verfahren nach einem der vorstehenden Ansprüche durchzuführen.

14. Computerprogramm, das eine Recheneinheit (80) veranlasst, ein Verfahren nach einem der Ansprüche 1 bis 12 durchzuführen, wenn es auf der Recheneinheit, insbesondere nach Anspruch 13, ausgeführt wird.

15. Maschinenlesbares Speichermedium mit einem darauf gespeicherten Computerprogramm nach Anspruch 14.

16. Antriebsstrang mit einem rotierenden Element (2), wobei der Antriebsstrang (10) wenigstens zwei Sensoren (20, 21) aufweist, die in umfänglicher Richtung versetzt an dem rotierenden Element (2) angeordnet und dazu eingerichtet sind, je einen Messwert des rotierenden Elements (2) zur Ermittlung einer Drehwinkelstellung und/oder einer Drehzahl zu erfassen.

17. Antriebsstrang nach Anspruch 16, wobei das rotierende Element (2) ein Signalband und/oder ein Zahnrad aufweist.

18. Energieerzeugungsanlage, insbesondere Windenergieanlage (100), mit einer Recheneinheit (80) nach Anspruch 13 und/oder einem Antriebsstrang (10) nach Anspruch 16 oder 17.
